# EUROPEAN PATENT APPLICATION

(11) **EP 4 836 112 A1**
(43) Date of publication of application: **04.11.2026**
(21) Application number: 24910061.1
(22) Date of filing: 24.09.2024
(51) Int. Cl.: H01M 50/152, H01M 50/179, H01M 50/536, H01M 50/533

(54) **BATTERY CELL, BATTERY, BATTERY MODULE, BATTERY PACK, AND ELECTRIC DEVICE**

(30) Priority: 29.12.2023 CN 202323666406 U
(71) Applicant: BYD Company Limited, Shenzhen, Guangdong 518118 (CN)
(72) Inventor: CHEN, Jiankang, Shenzhen, Guangdong 518118 (CN); LIU, Yanchu, Shenzhen, Guangdong 518118 (CN); SONG, Fei, Shenzhen, Guangdong 518118 (CN); MA, Zhiying, Shenzhen, Guangdong 518118 (CN); WANG, Yadong, Shenzhen, Guangdong 518118 (CN)
(74) Representative: Mathys & Squire
(86) International application number: PCT/CN2024/120669
(87) International publication number: WO 2025/139117

(57) **Abstract**

A power-consuming apparatus is provided. The power-consuming apparatus includes a battery pack, the battery pack includes a battery module or a battery, the battery module includes the battery, the battery includes a battery cell, and the battery cell includes an electrode core, a first current collector plate, and a second current collector plate. A first tab and a second tab are disposed at an end of the electrode core. The first current collector plate is disposed at the end of the electrode core, and the first current collector plate is connected to the first tab. The second current collector plate is disposed at the end of the electrode core, the second current collector plate is connected to the second tab, and at least one of the second current collector plate and the first current collector plate is a single-layer structural member.

## Description

### CROSS-REFERENCE TO RELATED APPLICATIONS

This application claims priority to Chinese Patent Application No. 202323666406.7, filed with the China National Intellectual Property Administration on December 29, 2023 and entitled "BATTERY CELL, BATTERY, BATTERY MODULE, BATTERY PACK, AND POWER-CONSUMING APPARATUS", which is incorporated herein by reference in its entirety.

### TECHNICAL FIELD

This application relates to the field of vehicle technologies, and in particular to a battery cell, a battery, a battery module, a battery pack, and a power-consuming apparatus.

### BACKGROUND

As a core component of a power battery, a battery cell plays a crucial role in the power battery. In the power battery, the battery cell determines performance and quality of a power battery product, and also affects battery range and capacity of a vehicle.

In related technologies, a battery cell includes a tab and a current collector plate. The tab is connected to the current collector plate, to facilitate smooth flowing of current from the tab. Generally, the current collector plate has a complex structure and a long current flow path, which results in high impedance of the battery cell and hinders normal use of the battery cell.

### SUMMARY

This application is intended to resolve at least one of the technical problems existing in conventional technologies. Therefore, an objective of this application is to provide a battery cell that reduces structural impedance of the battery cell, facilitates normal use of the battery cell, and improves internal space utilization of the battery cell.

A second objective of this application is to provide a battery that uses the foregoing battery cell.

A third objective of this application is to provide a battery module that uses the foregoing battery.

A fourth objective of this application is to provide a battery pack that uses the foregoing battery or battery module.

A fifth objective of this application is to provide a power-consuming apparatus that uses the foregoing battery pack.

According to an embodiment of a first aspect in this application, a battery cell includes: an electrode core, where a first tab and a second tab are disposed at an end of the electrode core; a first current collector plate, wherein the first current collector plate is disposed at the end of the electrode core, and the first current collector plate is connected to the first tab; and a second current collector plate, wherein the second current collector plate is disposed at the end of the electrode core, and the second current collector plate is connected to the second tab, and at least one of the second current collector plate and the first current collector plate being a single-layer structural member.

According to the battery cell of this application, the at least one of the second current collector plate and the first current collector plate is provided as the single-layer structural member, so that a current carrier of the first tab or the second tab can directly flow through the second current collector plate or the first current collector plate along a thickness direction of the first current collector plate or the second current collector plate, thereby reducing structural impedance of the battery cell, facilitating normal use of the battery cell, and improving use performance of the battery cell. In addition, the single-layer structure has a simple structure and uses less materials, thereby reducing production costs of the battery cell. Moreover, the battery cell adopts same-end lead-out, thereby improving internal space utilization of the battery cell.

According to some embodiments of this application, the first current collector plate is located on a side of the first tab away from the electrode core, and the second current collector plate is located on a side of the second tab away from the electrode core.

According to some embodiments of this application, the second current collector plate includes: a first connecting part, wherein the second current collector plate is connected to the second tab through the first connecting part; a second connecting part, wherein the second connecting part is disposed on a side of the first connecting part away from the second tab; and a third connecting part, wherein the third connecting part is connected to a side of the second connecting part away from the first connecting part.

According to some embodiments of this application, both the first connecting part and the third connecting part extend along a direction perpendicular to a central axis of the electrode core, and the second connecting part is perpendicularly connected between the first connecting part and the third connecting part.

According to some embodiments of this application, the first connecting part includes two first sub-connecting parts spaced apart, each first sub-connecting part including a first side edge and a second side edge, the first side edge and the second side edge not being on the same straight line, the first side edges of the two first sub-connecting parts being opposite to each other, and the second side edges of the two first sub-connecting parts being located on the same straight line; the second connecting part includes two second sub-connecting parts spaced apart, one side of one of the second sub-connecting parts being connected to the first side edge and the second side edge of one of the first sub-connecting parts, and one side of the other of the second sub-connecting parts being connected to the first side edge and the second side edge of the other of the first sub-connecting parts; and the third connecting part includes a third sub-connecting part and a fourth sub-connecting part, the third sub-connecting part being connected between other sides of the two second sub-connecting parts opposite to the first side edges of the two first sub-connecting parts, one side of the fourth sub-connecting part being connected to other sides of the two second sub-connecting parts opposite to the second side edges of the two first sub-connecting parts and to the third sub-connecting part, and the other side of the fourth sub-connecting part extending toward a direction away from the first connecting part.

According to some embodiments of this application, the first side edge and the second side edge are perpendicular to each other.

According to some embodiments of this application, the second current collector plate is symmetrically arranged with respect to an extension direction of the third sub-connecting part.

According to some embodiments of this application, a minimum distance between the first connecting part and the central axis of the electrode core is d₁, and d₁ satisfies 2 mm≤d₁≤7.7 mm.

According to some embodiments of this application, the first connecting part is located on a radially inner side of an outer peripheral edge of the electrode core, and a distance between the first connecting part and the outer peripheral edge of the electrode core is d₂, and d₂ satisfies 0.5 mm≤d₂≤2 mm.

According to some embodiments of this application, the second current collector plate is a negative current collector plate, and the second current collector plate is a stamped part made of steel or copper.

According to some embodiments of this application, a connecting protrusion is provided on a surface of a side of the first current collector plate adjacent to the first tab, and the first current collector plate is connected to the first tab through the connecting protrusion.

According to some embodiments of this application, the connecting protrusion includes a first protrusion part and a second protrusion part, one end of the first protrusion part being connected to one end of the second protrusion part, and the other end of the first protrusion part and the other end of the second protrusion part extending toward a direction away from each other.

According to some embodiments of this application, an included angle between the first protrusion part and the second protrusion part is β, and β satisfies 20°≤β≤80°.

According to some embodiments of this application, the one end of the first protrusion part and the one end of the second protrusion part are adjacent to a center of the end of the electrode core, and the other end of the first protrusion part and the other end of the second protrusion part extend toward a direction away from the center of the end of the electrode core and pass through an outer peripheral edge of the first current collector plate.

According to some embodiments of this application, a notch is formed at an edge of the first current collector plate away from the center of the end of the electrode core.

According to some embodiments of this application, the notch is located between the other end of the first protrusion part and the other end of the second protrusion part.

According to some embodiments of this application, a minimum distance between the connecting protrusion and the central axis of the electrode core is d₃, and d₃ satisfies 2 mm≤d₃≤8 mm.

According to some embodiments of this application, the connecting protrusion is formed by a portion of a surface of a side of the first current collector plate away from the first tab protruding toward a surface of a side adjacent to the first tab.

According to some embodiments of this application, the connecting protrusion forms a groove in the surface of the side of the first current collector plate away from the first tab, to form the connecting protrusion on the surface of the side adjacent to the first tab, a depth of the groove is h, and h satisfies 0 mm<h≤2 mm.

According to some embodiments of this application, a minimum distance between a side of the first current collector plate away from the central axis of the electrode core and an outer peripheral surface of the electrode core is d₄, and d₄ satisfies 0.5 mm≤d₄≤2 mm.

According to some embodiments of this application, the first current collector plate is a positive current collector plate, and the first current collector plate is a stamped part made of an aluminum sheet.

According to some embodiments of this application, the battery cell further includes a cover plate assembly. The cover plate assembly is disposed on a side of the first current collector plate away from the electrode core.

According to some embodiments of this application, the cover plate assembly includes: a cover plate body, wherein the second current collector plate is connected to the cover plate body; and a positive terminal post, wherein the positive terminal post passes through the cover plate body, the positive terminal post being insulatively connected to the cover plate body, and the first current collector plate being connected to the positive terminal post.

According to some embodiments of this application, the positive terminal post includes a first terminal post segment and a second terminal post segment connected to each other, and the first terminal post segment passes through the cover plate body; and the cover plate assembly further includes an insulating separator. The insulating separator is disposed between the cover plate body and the second terminal post segment.

According to some embodiments of this application, an anti-rotation groove is formed in the insulating separator, and the second terminal post segment is fitted in the anti-rotation groove; and the first current collector plate is provided with a mating part extending toward the anti-rotation groove, the mating part being fitted in the anti-rotation groove, and the mating part being located on a side of the second terminal post segment away from the cover plate body.

According to some embodiments of this application, an anti-rotation protrusion is provided on a surface of a side of the insulating separator adjacent to the first current collector plate, the anti-rotation protrusion and the surface of the side of the insulating separator adjacent to the first current collector plate together defining the anti-rotation groove, and a side of the anti-rotation groove adjacent to a center of the first current collector plate being open.

According to some embodiments of this application, the second current collector plate is interference-fitted between the second tab and the cover plate body.

According to some embodiments of this application, a height of the second current collector plate is h₁, a distance between a surface of a side of the cover plate body facing the first current collector plate and a surface of a side of the first current collector plate away from the cover plate body is h₂, and h₁ and h₂ satisfy 0 mm≤h₁-h₂≤1 mm.

According to an embodiment of a second aspect in this application, a battery includes the battery cell according to the embodiment of the first aspect in this application.

According to an embodiment of a third aspect in this application, a battery module includes the battery according to the embodiment of the second aspect in this application.

According to an embodiment of a fourth aspect in this application, a battery pack includes the battery according to the embodiment of the second aspect in this application or the battery module according to the embodiment of the third aspect in this application.

According to an embodiment of a fifth aspect in this application, a power-consuming apparatus includes the battery pack according to the embodiment of the fourth aspect in this application.

Additional aspects and advantages of this application are set forth in part in the following description and in part become apparent from the following description or may be learned through the practice of this application.

### BRIEF DESCRIPTION OF DRAWINGS

The foregoing and/or additional aspects and advantages of this application become apparent and easily understood from the descriptions of embodiments with reference to the following accompanying drawings.
FIG. 1 is a diagram of a battery cell according to an embodiment of this application;
FIG. 2 is an exploded view of a battery cell according to an embodiment of this application;
FIG. 3 is a cross-sectional view of an end portion of a battery cell according to an embodiment of this application;
FIG. 4 is a partial view of a battery cell according to an embodiment of this application, where a base plate is not shown;
FIG. 5 is a diagram of a second current collector plate of a battery cell according to an embodiment of this application;
FIG. 6 is an assembling top view of a second current collector plate, a first current collector plate, and an electrode core of a battery cell according to an embodiment of this application;
FIG. 7 is an assembling diagram of a cover plate assembly and a first current collector plate of a battery cell according to an embodiment of this application;
FIG. 8 is an exploded view of a cover plate assembly and a first current collector plate of a battery cell according to an embodiment of this application;
FIG. 9 is a diagram of a first current collector plate of a battery cell according to an embodiment of this application;
FIG. 10 is a diagram of a cover plate assembly of a battery cell according to an embodiment of this application;
FIG. 11 is a diagram of a battery cell from another angle according to an embodiment of this application;
FIG. 12 is an exploded view of a battery cell from another angle according to an embodiment of this application;
FIG. 13 is a diagram of a sealing structure of a battery cell according to an embodiment of this application;
FIG. 14 is a block diagram of a battery according to an embodiment of this application;
FIG. 15 is a block diagram of a battery module according to an embodiment of this application;
FIG. 16 is a block diagram of a battery pack according to an embodiment of this application;
FIG. 17 is another block diagram of a battery pack according to an embodiment of this application; and
FIG. 18 is a block diagram of a power-consuming apparatus according to an embodiment of this application.

### Reference numerals:

4000: power-consuming apparatus; 3000: battery pack; 2000: battery module; 1000: battery;
100: battery cell;
1: electrode core; 11: first tab; 12: second tab; 13: central hole;
2: first current collector plate; 21: connecting protrusion; 211: first protrusion part; 212: second protrusion part; 22: notch; 23: groove; 24: mating part;
3: second current collector plate; 31: first connecting part; 311: first sub-connecting part; 3111: first side edge; 3112: second side edge; 32: second connecting part; 321: second sub-connecting part;
33: third connecting part; 331: third sub-connecting part; 332: fourth sub-connecting part;
4: cover plate assembly; 41: cover plate body; 42: positive terminal post; 421: first terminal post segment; 422: second terminal post segment; 43: insulating separator; 431: anti-rotation groove; 432: anti-rotation protrusion;
5: housing; 50: shell body; 51: bottom cover plate; 511: liquid injection hole; 512: sealing structure; 5121: elastic sealing gasket; 5122: sealing cover;
6: first insulating member; 7: second insulating member; 8: base plate; 9: separator.

### DESCRIPTION OF EMBODIMENTS

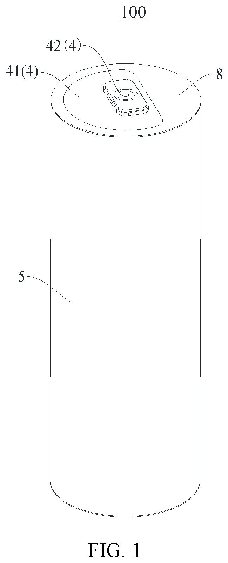

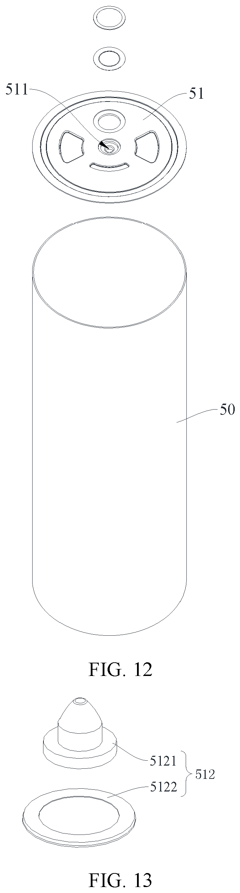

Embodiments of this application are described in detail below. Embodiments described with reference to the accompanying drawings are examples. A battery cell 100 according to an embodiment of a first aspect in this application is described below with reference to FIG. 1 to FIG. 13.

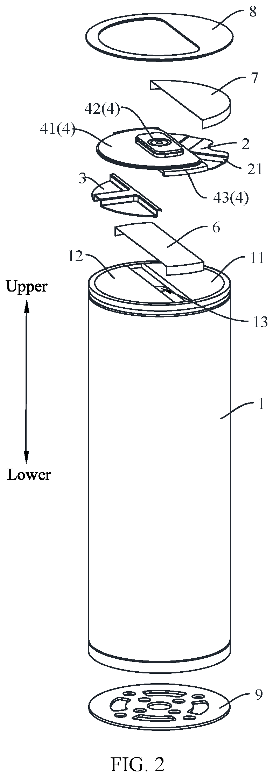

As shown in FIG. 1 and FIG. 2, the battery cell 100 according to the embodiment of the first aspect in this application includes an electrode core 1, a first current collector plate 2, and a second current collector plate 3.

Specifically, a first tab 11 and a second tab 12 are disposed at an end of the electrode core 1. For example, in the examples in FIG. 1 and FIG. 2, both the first tab 11 and the second tab 12 are located at an upper end of the electrode core 1. The first tab 11 may be set as a positive tab, and the second tab 12 may be set as a negative tab. Therefore, the battery cell 100 adopts the same-end lead-out, so that the battery cell 100 only needs to be provided with an exhaust channel at the end of the electrode core 1, thereby improving internal space utilization of the battery cell 100.

With reference to FIG. 2, the first current collector plate 2 is disposed at the end of the electrode core 1, and the first current collector plate 2 is connected to the first tab 11. The second current collector plate 3 is disposed at the end of the electrode core 1, the second current collector plate 3 is connected to the second tab 12, and at least one of the second current collector plate 3 and the first current collector plate 2 is a single-layer structural member. For example, in the example of FIG. 2, both the first current collector plate 2 and the second current collector plate 3 are disposed at the upper end of the electrode core 1. Arrangement of the first current collector plate 2 and the second current collector plate 3 includes the following cases: 1. Only the first current collector plate 2 is a single-layer structural member. 2. Only the second current collector plate 3 is a single-layer structural member. 3. Both the first current collector plate 2 and the second current collector plate 3 are single-layer structural members. "Single-layer structural member" refers to a structural member that has no bending or overlapping portion along a thickness direction of the structural member. In other words, the first current collector plate 2 itself is of a single layer with no bending or overlapping portion, and the second current collector plate 3 itself is of a single layer with no bending or overlapping portion.

Therefore, current on the first tab 11 may flow out through the first current collector plate 2, current on the second tab 12 may flow out through the second current collector plate 3, and a current carrier can directly flow through the first current collector plate 2 or the second current collector plate 3 along a thickness direction of the first current collector plate 2 or the second current collector plate 3, thereby shortening a current-carrier flow path, and reducing a structural impedance of the battery cell 100, facilitating normal use of the battery cell 100, and improving use performance of the battery cell 100. In addition, the single-layer structural member has a simple structure and uses less materials, thereby reducing production costs of the second current collector plate 3 and the first current collector plate 2, and reducing production costs of the battery cell 100.

According to the battery cell 100 of this application, the at least one of the second current collector plate 3 and the first current collector plate 2 is provided as the single-layer structural member, so that the current carrier of the first tab 11 or the second tab 12 can directly flow through the first current collector plate 2 or the second current collector plate 3 along the thickness direction of the first current collector plate 2 or the second current collector plate 3, thereby reducing structural impedance of the battery cell 100, facilitating normal use of the battery cell 100, and improving use performance of the battery cell 100. In addition, the single-layer structure has a simple structure and uses less materials, thereby reducing production costs of the battery cell 100. Moreover, the battery cell 100 adopts same-end lead-out, thereby improving internal space utilization of the battery cell 100.

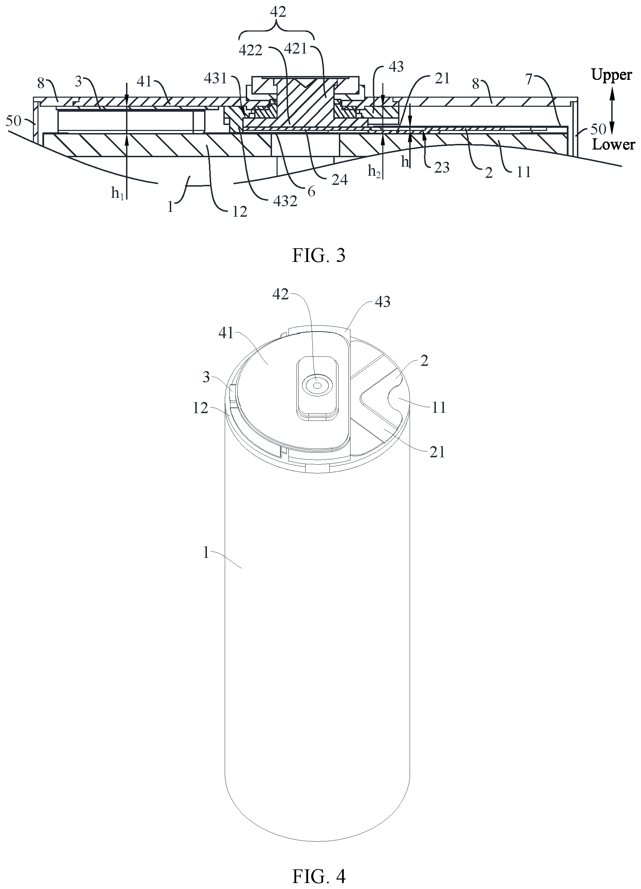

According to some embodiments of this application, with reference to FIG. 2 and FIG. 3, the first current collector plate 2 is located on a side of the first tab 11 away from the electrode core 1, and the second current collector plate 3 is located on a side of the second tab 12 away from the electrode core 1. For example, in the examples of FIG. 2 and FIG. 3, the first current collector plate 2 is disposed on an upper side of the first tab 11, and a lower side surface of the first current collector plate 2 is connected to an upper side surface of the first tab 11. The second current collector plate 3 is disposed on an upper side of the second tab 12, and a lower side surface of the second current collector plate 3 is connected to an upper side surface of the second tab 12. Such arrangement facilitates assembly of the first current collector plate 2 and the first tab 11, and also facilitates assembly of the second current collector plate 3 and the second tab 12, thereby improving assembly efficiency of the battery cell 100. In addition, layouts of the electrode core 1, the first current collector plate 2, and the second current collector plate 3 are optimised, so that the battery cell 100 has higher integration. Moreover, after the battery cell 100 is mounted, the second current collector plate 3 and the first current collector plate 2 are located at the end of the electrode core 1, thereby facilitating detection of the second current collector plate 3 and the first current collector plate 2, and improving detectability of the second current collector plate 3 and the first current collector plate 2.

Optionally, the second current collector plate 3 is connected to the second tab 12 by welding, and the first current collector plate 2 is connected to the first tab 11 by welding. For example, the second current collector plate 3 is laser-welded to the second tab 12, and the first current collector plate 2 is laser-welded to the first tab 11. Therefore, a connection between the second current collector plate 3 and the second tab 12 is secure, and a connection between the first current collector plate 2 and the first tab 11 is secure, thereby preventing the second current collector plate 3 from detaching from the second tab 12 and preventing the first current collector plate 2 from detaching from the first tab 11, and improving connection stability of the first current collector plate 2 and the second current collector plate 3. In addition, in comparison with conventional torsional welding, the use of laser welding for connection imposes no limitation on a current carrier flowing through the first current collector plate 2 and the second current collector plate 3, and has lower welding costs, thereby further reducing production costs of the battery cell 100, and improving welding yield and detectability of the battery cell 100. Moreover, the welding method is simple, thereby improving feasibility of a welding process.

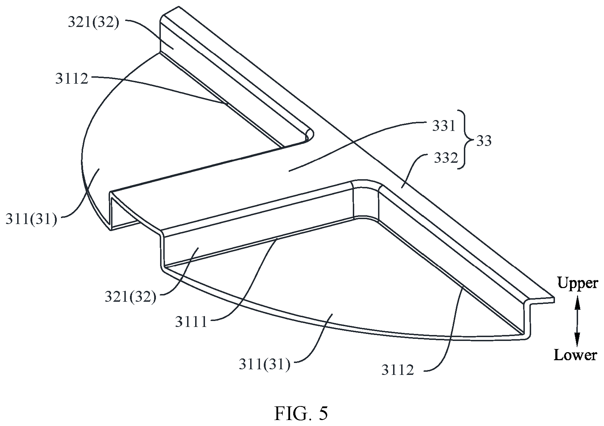

According to some embodiments of this application, with reference to FIG. 5, the second current collector plate 3 includes a first connecting part 31, a second connecting part 32, and a third connecting part 33.

Specifically, the second current collector plate 3 is connected to the second tab 12 through the first connecting part 31, the second connecting part 32 is disposed on a side of the first connecting part 31 away from the second tab 12, and the third connecting part 33 is connected to a side of the second connecting part 32 away from the first connecting part 31. For example, in the example in FIG. 5, a lower side surface of the first connecting part 31 is connected to the upper side surface of the second tab 12, a lower end of the second connecting part 32 is connected to an upper side surface of the first connecting part 31, and a lower side surface of the third connecting part 33 is connected to an upper end of the second connecting part 32. The first connecting part 31 may be formed by protruding toward the second tab 12, and the third connecting part 33 may be formed by protruding toward away from the second tab 12. There is a height difference between the third connecting part 33 and the first connecting part 31. Therefore, the first connecting part 31 is connected to the second tab 12, and a contact area between the first connecting part 31 and the second tab 12 is large, so that a connection between the first connecting part 31 and the second tab 12 is convenient and secure. In addition, the second connecting part 32 acts as a reinforcing rib, and the second connecting part 32 may support the first connecting part 31 and the third connecting part 33, thereby improving structural strength of the second current collector plate 3, and facilitating long-term stable use of the second current collector plate 3. Moreover, the connection between the first connecting part 31 and the second tab 12 is strengthened, and a connection between the third connecting part 33 and another component (such as a cover plate body 41 and other electrical lead-out members) of the battery cell 100 is also strengthened, so that current of the second tab 12 flows out, thereby improving flatness of the connection between the second current collector plate 3 and the second tab 12, preventing the second current collector plate 3 from undergoing collapse under stress, and further improving use performance of the second current collector plate 3.

In the conventional technologies, the single-layer current collector plate used is usually a flat sheet-shaped current collector plate without a reinforcing rib. Flatness of a contact surface between the second current collector plate and the second tab is poor, and welding yield is poor. In the solution of this application, the first connecting part 31 of the second current collector plate 3 protrudes toward the second tab 12, the third connecting part 33 protrudes away from the second tab 12, the first connecting part 31 is configured to connect to the second tab 12, the third connecting part 33 is configured to connect to the cover plate body 41 and other electrical lead-out members to lead out the current of the second tab 12, the second connecting part 32 plays a role of strengthening the structural strength of the second current collector plate 2 and also supports and strengthens the connection between the first connecting part 31 and the second tab 12 and a connection to other electrical connecting members, so that the flatness of the connection between the second current collector plate 3 and the second tab 12 is better and it is not prone to collapse under stress.

According to some embodiments of this application, with reference to FIG. 5, both the first connecting part 31 and the third connecting part 33 extend along a direction perpendicular to a central axis of the electrode core 1, and the second connecting part 32 is vertically connected between the first connecting part 31 and the third connecting part 33. For example, in the example in FIG. 5, the first connecting part 31 and the third connecting part 33 are parallel to the upper side surface of the second tab 12, and the second connecting part 32 is perpendicular to the upper side surface of the second tab 12. Such arrangement improves flatness of the second current collector plate 3, thereby facilitating connection of the second current collector plate 3 to another component of the battery cell 100 through the third connecting part 33, improving welding yield between the second current collector plate 3 and another component of the battery cell 100, effectively preventing the second current collector plate 3 from detaching from the battery cell 100, and improving use stability of the second current collector plate 3. In addition, the second current collector plate 3 has a simple structure and is easy to manufacture and process, thereby improving production efficiency of the second current collector plate 3, and reducing production costs of the second current collector plate 3.

According to some embodiments of this application, with reference to FIG. 5, the first connecting part 31 includes two first sub-connecting parts 311 spaced apart, each first sub-connecting part 311 includes a first side edge 3111 and a second side edge 3112, the first side edge 3111 and the second side edge 3112 are not on the same straight line (that is, the first side edge 3111 and the second side edge 3112 are arranged at an included angle), the first side edges 3111 of the two first sub-connecting parts 311 are opposite to each other, and the second side edges 3112 of the two first sub-connecting parts 311 are located on the same straight line. For example, in the example in FIG. 5, the two first sub-connecting parts 311 are respectively located on two sides of the second connecting part 32, and the first sub-connecting part 311 may be provided in a sector shape, with the first side edge 3111 and the second side edge 3112 being two straight edges of the sector shape. Therefore, all the two first sub-connecting parts 311 can be connected to the second tab 12, thereby improving overall stability of the connection between the second current collector plate 3 and the second tab 12, making the connection secure, preventing the second current collector plate 3 from detaching from the second tab 12, and improving use performance of the battery cell 100. In addition, a contact area between the second current collector plate 3 and the second tab 12 is increased by using the two first sub-connecting parts 311, thereby not only improving strength of the connection between the second current collector plate 3 and the second tab 12, but also reducing structural impedance of the battery cell 100.

With reference to FIG. 5, the second connecting part 32 includes two second sub-connecting parts 321 spaced apart, one side of one of the second sub-connecting parts 321 is connected to the first side edge 3111 and the second side edge 3112 of one of the first sub-connecting parts 311, and one side of the other of the second sub-connecting parts 321 is connected to the first side edge 3111 and the second side edge 3112 of the other of the first sub-connecting parts 311. For example, in the example in FIG. 5, the two second sub-connecting parts 321 are in a one-to-one correspondence with the two first sub-connecting parts 311, the two second sub-connecting parts 321 are spaced apart along an arrangement direction of the two first sub-connecting parts 311, the second sub-connecting parts 321 may be vertically arranged, and the second sub-connecting parts 321 bend and extend along a direction of the first side edge 3111 and the second side edge 3112, with a bent portion featuring an arc-shaped transition. With such arrangement, the second sub-connecting part 321 has a simple structure, thereby simplifying the structure of the second current collector plate 3, reducing production difficulty of the second current collector plate 3, and improving production efficiency of the second current collector plate 3. In addition, structural strength of the second sub-connecting part 321 is strengthened, thereby further improving a supporting effect of the second connecting part 32 on the first connecting part 31 and the third connecting part 33, and improving structural strength of the second current collector plate 3.

With reference to FIG. 5, the third connecting part 33 includes a third sub-connecting part 331, and the third sub-connecting part 331 is connected to the other sides of the two second sub-connecting parts 321 opposite to the first side edges 3111 of the two first sub-connecting parts 311. For example, a lower surface of the third sub-connecting part 331 is connected to an upper side of the second sub-connecting part 321 opposite to the first side edge 3111, the third sub-connecting part 331 may be connected between the two second sub-connecting parts 321, and two sides of the third sub-connecting part 331 along a width direction of the third sub-connecting part 331 extend beyond the second sub-connecting parts 321. Therefore, the second current collector plate 3 may be connected to the cover plate body 41 through the third sub-connecting part 331.

Further, the third connecting part 33 includes a fourth sub-connecting part 332, one side of the fourth sub-connecting part 332 is connected to the other sides of the two second sub-connecting parts 321 opposite to the second side edges 3112 of the two first sub-connecting parts 311 and to the third sub-connecting part 331, and the other side of the fourth sub-connecting part 332 extends toward a direction away from the first connecting part 31.

For example, in the example in FIG. 5, the third connecting part 33 is roughly "T"-shaped, the third sub-connecting part 331 is a vertical segment of the "T", and the fourth sub-connecting part 332 is a horizontal segment of the "T". The two sides of the third sub-connecting part 331 in the width direction are respectively connected to the one side of each of the two second sub-connecting parts 321 away from the two first side edges 3111 (namely, an upper side of the second sub-connecting part 321 opposite to the first side edge 3111). A plane on which the fourth sub-connecting part 332 is located is parallel to a plane on which the first sub-connecting part 311 is located, a side of the fourth sub-connecting part 332 facing the first connecting part 31 is connected to one side of each of the two second sub-connecting parts 321 away from the two second side edges 3112, and one side of the fourth sub-connecting part 332 facing the first sub-connecting part 311 is connected to one side of the third sub-connecting part 331 facing the fourth sub-connecting part 332. With such an arrangement, the two second sub-connecting parts 321 are connected together by using the third sub-connecting part 331, thereby integrating the second current collector plate 3 into a whole, and improving the structural strength of the second current collector plate 3. Further, the arrangement of the fourth sub-connecting part 332 increases an area of the third connecting part 33, thereby improving stability of a connection between an upper surface of the second current collector plate 3 and another component of the battery cell 100 when the second current collector plate 3 is connected to another component of the battery cell 100. In addition, the second current collector plate 3 has a simple structure and is easy to manufacture, thereby improving production efficiency of the second current collector plate 3. Moreover, the fourth sub-connecting part 332 acts as a reinforcing rib, thereby improving the strength and the flatness of the second current collector plate 3, and increasing welding yield.

According to some embodiments of this application, with reference to FIG. 5, the first side edge 3111 and the second side edge 3112 are perpendicular to each other. For example, in the example in FIG. 5, the two first sub-connecting parts 311 have roughly the same shape, and both are roughly in a right-angled sector shape. Such arrangement simplifies the structure and reduces manufacturing difficulty of the two first sub-connecting parts 311, thereby increasing a production efficiency of the second current collector plate 3. In addition, the two second sub-connecting parts 321 are roughly of a right-angled structure, further improving supporting effects of the two second sub-connecting parts 321, and further improving the structural strength of the second current collector plate 3.

According to some embodiments of this application, with reference to FIG. 5, the second current collector plate 3 is symmetrically arranged with respect to an extension direction of the third sub-connecting part 331 (namely, an extension direction of the first side edge 3111). With such arrangement, the third sub-connecting part 331 and the corresponding second sub-connecting parts 321 below the third sub-connecting part 331 are both located in a middle of the second current collector plate 3, thereby further improving a reinforcing support effect of the second connecting part 32. Therefore, under pressure, the second current collector plate 3 is subjected to uniform force, which may prevent the second current collector plate 3 from overturning and tearing, thereby helping to improve the strength of the connection between the second current collector plate 3 and the second tab 12.

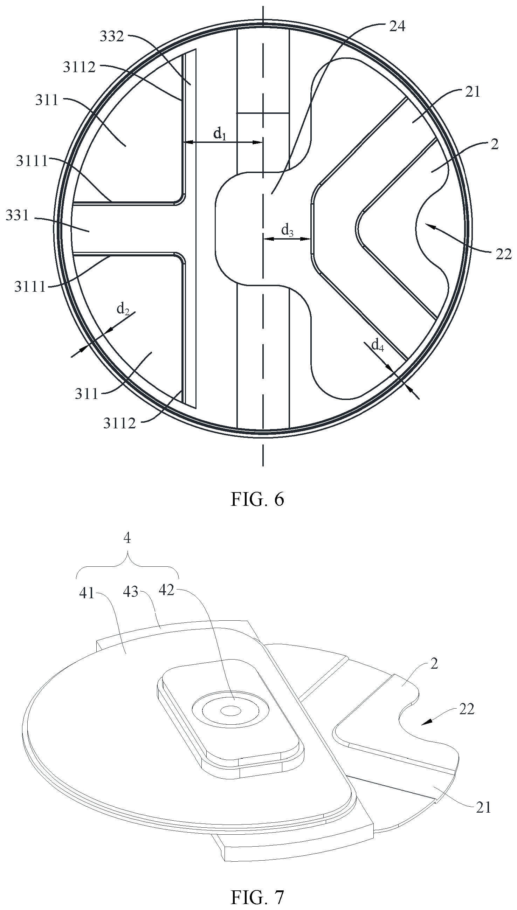

According to some embodiments of this application, with reference to FIG. 6, a minimum distance between the first connecting part 31 and the central axis of the electrode core 1 is d₁, and d₁ satisfies 2 mm≤d₁≤7.7 mm. For example, in the example in FIG. 6, a minimum distance between the second side edge 3112 and the central axis of the electrode core 1 is d₁. For example, when the minimum distance between the first connecting part 31 and the central axis of the electrode core 1 is greater than 7.7 mm, the contact area between the first connecting part 31 and the second tab 12 is small, which may reduce uniformity of weld spot distribution, and increase a structural impedance of the electrode core 1. When the minimum distance between the first connecting part 31 and the central axis of the electrode core 1 is less than 2 mm, a gap between the first connecting part 31 and the first current collector plate 2 is small, which may make it easy for the second current collector plate 3 to be in contact with the first current collector plate 2, cause a short circuit between the second current collector plate 3 and the first current collector plate 2, and affect normal use of the battery cell 100. Therefore, by setting the minimum distance d₁ between the first connecting part 31 and the central axis of the electrode core 1 to satisfy 2 mm≤d₁≤7.7 mm, uniformity of welding joint distribution at the connection between the first connecting part 31 and the second tab 12 is improved, and structural impedance of the electrode core 1 is reduced. In addition, this prevents a short circuit caused by contact between the second current collector plate 3 and the first current collector plate 2, thereby facilitating normal use of the battery cell 100 for a long period of time.

According to some embodiments of this application, with reference to FIG. 6, the first connecting part 31 is located on a radially inner side of an outer peripheral edge of the electrode core 1, a distance between the first connecting part 31 and the outer peripheral edge of the electrode core 1 is d₂, and d₂ satisfies 0.5 mm≤d₂≤2 mm. For example, when the distance d₂ between the first connecting part 31 and the outer peripheral edge of the electrode core 1 is greater than 2 mm, a connection area between the first connecting part 31 and the second tab 12 is small, stability of the connection between the second current collector plate 3 and the second tab 12 is reduced, and this does not facilitate a current carrier to flow through, which increases structural impedance of the battery cell 100. When the distance d₂ between the first connecting part 31 and the outer peripheral edge of the electrode core 1 is less than 0.5 mm, the first connecting part 31 is likely to be contact with a housing 5 provided on the outer periphery of the electrode core 1, so that a current carrier of the battery cell 100 may flow through the housing 5, resulting in a high structural impedance of the battery cell 100. Therefore, by setting the distance d₂ between the first connecting part 31 and the outer peripheral edge of the electrode core 1 to satisfy 0.5 mm≤d₂≤2 mm, the connection area between the first connecting part 31 and the second tab 12 is large, the connection between the second current collector plate 3 and the second tab 12 is secure, and structural impedance of the battery cell 100 is reduced. In addition, this may effectively prevent the first connecting part 31 from being in contact with the housing 5 of the battery cell 100, thereby preventing the current carrier of the battery cell 100 from flowing through the housing 5, and further reducing structural impedance of the battery cell 100.

According to some embodiments of this application, the second current collector plate 3 is a negative current collector plate, and the second current collector plate 3 is a stamped part made of steel or copper. The steel possesses corrosion resistance and electrical conductivity, while the copper features good ductility and high electrical conductivity. Therefore, when the second current collector plate 3 is made of steel, this facilitates normal use of the second current collector plate 3, improves the structural strength of the second current collector plate 3, and facilitates long-term stable use of the second current collector plate 3. In addition, when the second current collector plate 3 is a stamped part made of copper, the flatness of the second current collector plate 3 is improved by copper stamping, thereby improving use performance of the second current collector plate 3; and the second current collector plate 3 is also easy to form, and the production difficulty of the second current collector plate 3 is reduced, thereby helping to improving the production efficiency of the second current collector plate 3.

According to some embodiments of this application, with reference to FIG. 2 to FIG. 4, a connecting protrusion 21 is provided on a surface of a side of the first current collector plate 2 adjacent to the first tab 11, and the first current collector plate 2 is connected to the first tab 11 through the connecting protrusion 21. For example, in the examples in FIG. 2 to FIG. 4, the connecting protrusion 21 is formed by a portion of the first current collector plate 2 protruding toward the first tab 11. With such arrangement, the first current collector plate 2 is in contact with and is connected to the first tab 11 through the connecting protrusion 21, which facilitates interference fit between the first current collector plate 2 and the first tab 11. This improves welding yield when the first current collector plate 2 is connected to the first tab 11 by welding, thereby increasing strength of the connection between the first current collector plate 2 and the first tab 11. In addition, the connecting protrusion 21 has a simple structure, thereby simplifying a structure of the first current collector plate 2, and facilitating mass production of the first current collector plate 2.

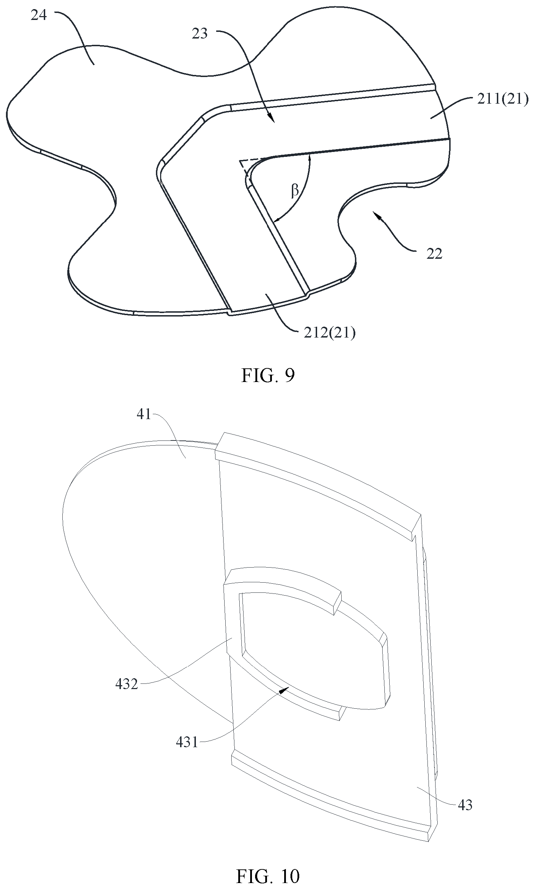

Further, with reference to FIG. 9, the connecting protrusion 21 includes a first protrusion part 211 and a second protrusion part 212, one end of the first protrusion part 211 and one end of the second protrusion part 212 are connected, and the other end of the first protrusion part 211 and the other end of the second protrusion part 212 extend toward a direction away from each other.

For example, in the example in FIG. 9, the connecting protrusion 21 may be arranged in a "V" shape, the one end of the first protrusion part 211 close to a center of the first current collector plate 2 is connected to the one end of the second protrusion part 212 close to the center of the first current collector plate 2, both the other end of the first protrusion part 211 and the other end of the second protrusion part 212 extend toward a direction away from the center of the first current collector plate 2, and the first protrusion part 211 and the second protrusion part 212 are symmetrical with respect to a center line of the first current collector plate 2. With such an arrangement, the connecting protrusion 21 has a simple structure and an optimised design. After the first current collector plate 2 is connected to the first tab 11, overall stability of the connection between the first current collector plate 2 and the first tab 11 is improved, and shaking or rotation of the first current collector plate 2 is prevented, thereby improving use stability of the battery cell 100. In addition, manufacturing difficulty of the connecting protrusion 21 is low, thereby reducing the manufacturing difficulty of the first current collector plate 2, and improving the production efficiency of the first current collector plate 2.

According to some embodiments of this application, with reference to FIG. 9, an included angle between the first protrusion part 211 and the second protrusion part 212 is β, and β satisfies 20°≤β≤80°. For example, when the included angle β between the first protrusion part 211 and the second protrusion part 212 is greater than 80°, a gap between the other end of the first protrusion part 211 and the other end of the second protrusion part 212 is large, which makes a gap between weld spots at an edge of the first current collector plate 2 large, and reduces stability of the connection between the first current collector plate 2 and the first tab 11 of the battery cell 100. When the included angle β between the first protrusion part 211 and the second protrusion part 212 is less than 20°, a gap between the other end of the first protrusion part 211 and the other end of the second protrusion part 212 is small, and a gap between two opposite sides of the first protrusion part 211 and the second protrusion part 212 is small, which reduces uniformity of weld spot distribution of the first current collector plate 2, and reduces connection stability of the first current collector plate 2. Therefore, by setting the included angle β between the first protrusion part 211 and the second protrusion part 212 to satisfy 20°≤β≤80°, positional distribution of the first protrusion part 211 and the second protrusion part 212 is optimised, thereby improving uniformity of weld spot distribution of the first current collector plate 2, improving connection stability of the first current collector plate 2, and facilitating long-term use of the first current collector plate 2.

According to some embodiments of this application, with reference to FIG. 9, the one end of the first protrusion part 211 and the one end of the second protrusion part 212 are adjacent to a center of the end of the electrode core 1, and the other end of the first protrusion part 211 and the other end of the second protrusion part 212 extend toward a direction away from the center of the end of the electrode core 1 and pass through an outer peripheral edge of the first current collector plate 2. For example, in the example in FIG. 9, the one end of the first protrusion part 211 communicates with the one end of the second protrusion part 212. Such an arrangement increases an overlapping region between the first protrusion part 211 as well as the second protrusion part 212 and the first tab 11, thereby increasing a contact area, and reducing structural impedance of the battery cell 100. In addition, the first protrusion part 211 and the second protrusion part 212 have simple structures, thereby facilitating production of the connecting protrusion 21, and improving the production efficiency of the first current collector plate 2. Moreover, by setting the ends of the first protrusion part 211 and the second protrusion part 212 away from each other to pass through the outer peripheral edge of the first current collector plate 2, a thickness of the edge of the first current collector plate 2 is reduced, thereby facilitating a current carrier to flow through, and further reducing the structural impedance.

According to some embodiments of this application, with reference to FIG. 9, a notch 22 is formed at an edge of the first current collector plate 2 away from the center of the end of the electrode core 1. For example, in the example in FIG. 9, the notch 22 is recessed toward a direction of the center of the first current collector plate 2, and the notch 22 may be provided in a semicircular shape. Therefore, when the first current collector plate 2 is connected to the first tab 11 by laser welding, in a cooling process of the first current collector plate 2 after welding, due to different coefficients of thermal expansion, some regions shrink more than other regions, which may cause a residual stress in a welding region. Providing the notch 22 can alleviate the residual stress, thereby preventing poor welding caused by thermal deformation of the first current collector plate 2 and the first tab 11 during welding, and further improving strength of the connection between the first current collector plate 2 and the first tab 11.

According to some embodiments of this application, with reference to FIG. 9, the notch 22 is located between the other end of the first protrusion part 211 and the other end of the second protrusion part 212. Therefore, the notch 22 is provided at an optimised position, roughly at a middle position of the edge of the first current collector plate 2 away from the center of the end of the electrode core 1. When the first current collector plate 2 is welded to the first tab 11 through the first protrusion part 211 and the second protrusion part 212, the notch 22 may better relieve the residual stress, thereby further improving welding yield between the first current collector plate 2 and the first tab 11, and helping to further improve strength of the connection between the first current collector plate 2 and the first tab 11.

According to some embodiments of this application, with reference to FIG. 6, a minimum distance between the connecting protrusion 21 and the central axis of the electrode core 1 is d₃, and d₃ satisfies 2 mm≤d₃≤8 mm. For example, when the minimum distance d₃ between the connecting protrusion 21 and the central axis of the electrode core 1 is greater than 8 mm, an overlapping region between the first current collector plate 2 and the first tab 11 is reduced, a contact area between the first current collector plate 2 and the first tab 11 is reduced, and the structural impedance of the battery cell 100 is increased. When the minimum distance d₃ between the connecting protrusion 21 and the central axis of the electrode core 1 is less than 2 mm, a gap between the first current collector plate 2 and the second current collector plate 3 is small, which may make it easy for the first current collector plate 2 to be in contact with the second current collector plate 3, causing a short circuit between the second current collector plate 3 and the first current collector plate 2, and affect normal use of the battery cell 100. Therefore, by setting the minimum distance d₃ between the connecting protrusion 21 and the central axis of the electrode core 1 to satisfy 2 mm≤d₃≤8 mm, the contact area between the first current collector plate 2 and the first tab 11 is increased, thereby reducing structural impedance of the battery cell 100. In addition, this may effectively prevent the short circuit between the first current collector plate 2 and the second current collector plate 3, thereby facilitating normal use of the battery cell 100. Moreover, a weld spot trajectory of the first current collector plate 2 and the first tab 11 is close to an inner side of the electrode core 1, thereby improving uniformity of weld spot distribution, and facilitating the connection between the first current collector plate 2 and the first tab 11.

According to some embodiments of this application, with reference to FIG. 3 and FIG. 4, the connecting protrusion 21 is formed by a portion of a surface of a side of the first current collector plate 2 away from the first tab 11 protruding toward a surface of a side adjacent to the first tab 11. For example, in the examples in FIG. 3 and FIG. 4, the connecting protrusion 21 is formed by a portion of an upper surface of the first current collector plate 2 protruding downward. Such an arrangement reduces a thickness of a region of the first current collector plate 2 in which the connecting protrusion 21 is provided, thereby shortening a path for the current carrier to flow through the connecting protrusion 21, facilitating use of the first current collector plate 2, and further reducing structural impedance. In addition, the connecting protrusion 21 has a simple structure and is easy to process, reducing production costs of the first current collector plate 2, and improving the production efficiency of the first current collector plate 2.

According to some embodiments of this application, with reference to FIG. 3 and FIG. 9, the connecting protrusion 21 forms a groove 23 in the surface of the side of the first current collector plate 2 away from the first tab 11, to form the connecting protrusion 21 on the surface of the side adjacent to the first tab 11, a depth of the groove 23 is h, and h satisfies 0 mm<h≤2 mm. For example, in the examples in FIG. 3 and FIG. 9, the connecting protrusion 21 forms a V-shaped groove on the upper surface of the first current collector plate 2. When the depth h of the groove 23 is greater than 2 mm, a height of a side wall of the groove 23 is high, which reduces structural strength of the connecting protrusion 21, and reduces structural strength of the first current collector plate 2. When the depth of the groove 23 is equal to 0 mm, a lower surface of the first current collector plate 2 is in complete contact with the first tab 11 and welded. As a result, the welding area is large, welding costs are high, and this does not facilitate a connection between the first current collector plate 2 and another component of the battery cell 100. Therefore, by setting the depth h of the groove 23 to satisfy 0 mm<h≤2 mm, the structural strength of the connecting protrusion 21 is improved, and the structural strength of the first current collector plate 2 is improved. In addition, this reduces welding costs of the first current collector plate 2, and also facilitates the connection between the first current collector plate 2 and another component of the battery cell 100.

Optionally, with reference to FIG. 6, a minimum distance between a side of the first current collector plate 2 away from the central axis of the electrode core 1 and an outer peripheral surface of the electrode core 1 is d₄, and d₄ satisfies 0.5 mm≤d₄≤2 mm. For example, when the minimum distance d₄ between the side of the first current collector plate 2 away from the central axis of the electrode core 1 and the outer peripheral surface of the electrode core 1 is greater than 2 mm, a connection area between the first current collector plate 2 and the first tab 11 is small, which does not facilitate a current carrier between the first tab 11 and the first current collector plate 2 to flow, and increases the structural impedance of the battery cell 100. When the minimum distance d₄ between the side of the first current collector plate 2 away from the central axis of the electrode core 1 and the outer peripheral surface of the electrode core 1 is less than 0.5 mm, the first current collector plate 2 is likely to be in contact with the housing 5 on the outer periphery of the electrode core 1, so that a current carrier of the battery cell 100 may flow through the housing 5, resulting in a high structural impedance of the battery cell 100. Therefore, by setting the distance d₄ between the side of the first current collector plate 2 away from the central axis of the electrode core 1 and the outer peripheral edge of the electrode core 1 to satisfy 0.5 mm≤d₄≤2 mm, the connection area between the first current collector plate 2 and the first tab 11 is large, the connection between the first current collector plate 2 and the first tab 11 is stable, and this facilitates a current carrier to flow, thereby reducing structural impedance of the battery cell 100. In addition, this effectively prevents the first current collector plate 2 from being in contact with the housing 5 of the battery cell 100, thereby preventing the current carrier of the battery cell 100 from flowing through the housing 5, and further reducing the structural impedance of the battery cell 100. In addition, the weld trajectory of the first current collector plate 2 and the first tab 11 is closer to the inner side of the electrode core 1, thereby improving uniformity of weld spot distribution of the first current collector plate 2.

According to some optional embodiments of this application, the first current collector plate 2 is a positive current collector plate, and the first current collector plate 2 may be disposed as a stamped part made of an aluminum sheet. Aluminum parts possess specific structural strength. Therefore, this improves the structural strength of the first current collector plate 2, and facilitates long-term stable use of the first current collector plate 2. In addition, the aluminum parts possess electrical conductivity, thereby facilitating flowing of the current carrier through the first current collector plate 2. Moreover, flatness of the first current collector plate 2 is improved by aluminum stamping, thereby improving use performance of the first current collector plate 2. However, this application is not limited thereto.

Further, with reference to FIG. 4, the battery cell 100 includes a cover plate assembly 4. The cover plate assembly 4 is disposed on a side of the first current collector plate 2 away from the electrode core 1. For example, in the example in FIG. 4, the cover plate assembly 4 is connected to the first current collector plate 2, and the cover plate assembly 4 is connected to the electrode core 1 through the first current collector plate 2. During assembly of the battery cell 100, the first current collector plate 2 is first connected to the first tab 11, and then the first current collector plate 2 is connected to the cover plate assembly 4, thereby helping the current carrier of the first current collector plate 2 to flow out to an outside of the battery cell 100 through the cover plate assembly 4, and facilitating normal use of the battery cell 100. In addition, assembling operations of the cover plate assembly 4 with the first current collector plate 2 and the electrode core 1 are simple, thereby improving assembly efficiency of the battery cell 100.

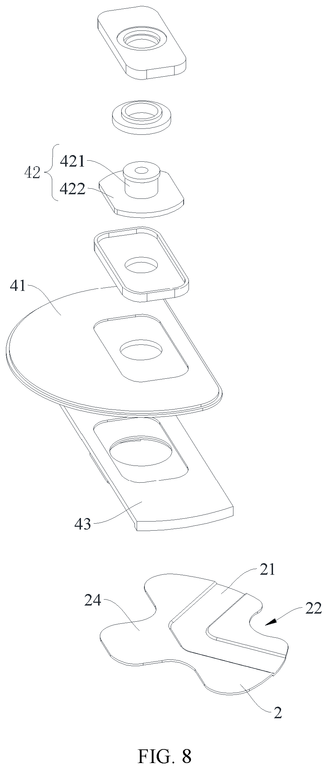

According to some embodiments of this application, with reference to FIG. 7 and FIG. 8, the cover plate assembly 4 includes the cover plate body 41 and a positive terminal post 42.

Specifically, the second current collector plate 3 is connected to the cover plate body 41, the positive terminal post 42 passes through the cover plate body 41, the positive terminal post 42 is insulatively connected to the cover plate body 41, and the first current collector plate 2 is connected to the positive terminal post 42. For example, in the examples in FIG. 7 and FIG. 8, an upper surface of the third connecting part 33 of the second current collector plate 3 is connected to a lower surface of the cover plate body 41 (for example, by welding). The upper surface of the first current collector plate 2 is connected to a lower end surface of the positive terminal post 42 (for example, by welding). Therefore, a current-carrier flow path of a positive electrode of the battery cell 100 is to sequentially flow through the first tab 11, the first current collector plate 2 and the positive terminal post 42 before flowing out, and a current-carrier flow path of a negative electrode of the battery cell 100 is to sequentially flow through the second tab 12 and the cover plate body 41 before flowing out, thereby making the current-carrier flow paths at both the positive electrode and the negative electrode of the battery cell 100 short, further reducing structural impedance of the battery cell 100, and facilitating use of the battery cell 100. In addition, the positive terminal post 42 is insulatively connected to the cover plate body 41, thereby preventing a short circuit between the positive terminal post 42 and the cover plate body 41, preventing a short circuit between the first current collector plate 2 and the second current collector plate 3, and facilitating long-term normal use of the battery cell 100.

According to some embodiments of this application, with reference to FIG. 3 and FIG. 8, the positive terminal post 42 includes a first terminal post segment 421 and a second terminal post segment 422 connected to each other, and the first terminal post segment 421 passes through the cover plate body 41. For example, in the examples in FIG. 3 and FIG. 8, a lower end of the first terminal post segment 421 is connected to an upper surface of the second terminal post segment 422, a cross-section of the second terminal post segment 422 is larger than a cross-section of the first terminal post segment 421, and a lower surface of the second terminal post segment 422 is welded to a portion of the upper surface of the first current collector plate 2. With such an arrangement, the first terminal post segment 421 facilitates a connection between the positive terminal post 42 and the cover plate body 41, and the second terminal post segment 422 facilitates a connection between the positive terminal post 42 and the first current collector plate 2. This facilitates connections between the positive terminal post 42 as well as the cover plate body 41 and the first current collector plate 2, and the connection is stable, facilitating long-term use of the positive terminal post 42. In addition, the positive terminal post 42 has a simple structure, thereby not only facilitating use of the positive terminal post 42, but also facilitating production and manufacturing of the positive terminal post 42.

With reference to FIG. 3 and FIG. 8, the cover plate assembly 4 further includes an insulating separator 43. The insulating separator 43 is disposed between the cover plate body 41 and the second terminal post segment 422. For example, in the examples in FIG. 3 and FIG. 8, the first terminal post segment 421 passes through the insulating separator 43 and is connected to the cover plate body 41, and the second terminal post segment 422 is located below the insulating separator 43 and is connected to the first current collector plate 2. Therefore, by providing the insulating separator 43, the cover plate body 41 may be insulated from the second terminal post segment 422, thereby preventing a short circuit between the cover plate body 41 and the positive terminal post 42, and preventing a short circuit between the first current collector plate 2 and the second current collector plate 3. In addition, the cover plate body 41 is insulatively connected to the first current collector plate 2, so that the current carrier on the first current collector plate 2 can only flow through the positive terminal post 42 and be led out, and may not flow to the cover plate body 41, thereby preventing a short circuit between the first current collector plate 2 and the cover plate body 41, and facilitating normal use of the battery cell 100.

Further, with reference to FIG. 3 and FIG. 10, an anti-rotation groove 431 is formed in the insulating separator 43, and the second terminal post segment 422 is fitted in the anti-rotation groove 431. The first current collector plate 2 is provided with a mating part 24 extending toward the anti-rotation groove 431, the mating part 24 is fitted in the anti-rotation groove 431, and the mating part 24 is located on a side of the second terminal post segment 422 away from the cover plate body 41. For example, in the examples in FIG. 3 and FIG. 10, the anti-rotation groove 431 is formed in a lower surface of the insulating separator 43, and an outer peripheral surface of the second terminal post segment 422 fits against a side wall of the anti-rotation groove 431. The mating part 24 is located inside the anti-rotation groove 431, an outer peripheral surface of the mating part 24 fits against the sidewall of the anti-rotation groove 431, and an upper surface of the mating part 24 fits against the lower surface of the second terminal post segment 422. With such an arrangement, after the insulating separator 43 is assembled with the positive terminal post 42 and the first current collector plate 2, the anti-rotation groove 431 has a limiting effect on the second terminal post segment 422 and the mating part 24. This may effectively prevent the positive terminal post 42 and the first current collector plate 2 from rotating in a plane perpendicular to the central axis of the electrode core 1, improve assembling stability of the cover plate assembly 4 and the first current collector plate 2, also prevent contact between the first current collector plate 2 after rotation and the second current collector plate 3, lower a requirement for manufacturing accuracy of the electrode core 1, the first tab 11, and the second tab 12, and improve the production efficiency of the electrode core 1. In addition, when the insulating separator 43 is assembled with the second terminal post segment 422 and the mating part 24, the anti-rotation groove 431 facilitates positioning of the second terminal post segment 422 and the mating part 24, thereby helping to achieve rapid assembly of the insulating separator 43 with the positive terminal post 42 and the first current collector plate 2, and improving assembly efficiency of the battery cell 100.

According to some embodiments of this application, with reference to FIG. 3 and FIG. 10, an anti-rotation protrusion 432 is provided on a surface of a side of the insulating separator 43 adjacent to the first current collector plate 2, the anti-rotation protrusion 432 and the surface of the side of the insulating separator 43 adjacent to the first current collector plate 2 together define the anti-rotation groove 431, and a side of the anti-rotation groove 431 adjacent to a center of the first current collector plate 2 is open. For example, in the examples in FIG. 3 and FIG. 10, the anti-rotation protrusion 432 may be provided in a "C" shape, and a shape of the anti-rotation protrusion 432 corresponds to an end of the second terminal post segment 422 facing the second current collector plate 3 and a side of the mating part 24 facing the second current collector plate 3. Such arrangement helps the mating part 24 of the first current collector plate 2 to be inserted into the anti-rotation groove 431 from the open side of the anti-rotation groove 431 along a direction perpendicular to an axis of the electrode core 1, thereby facilitating assembling of the mating part 24 and the anti-rotation protrusion 432, and improving assembly efficiency of the insulating separator 43 and the first current collector plate 2. In addition, this also helps the anti-rotation protrusion 432 to be in full contact with the second terminal post segment 422 and the mating part 24, to improve stability of connections between the insulating separator 43 as well as the positive terminal post 42 and the first current collector plate 2. Moreover, the anti-rotation protrusion 432 has a simple structure, thereby simplifying a structure of the insulating separator 43, and facilitating mass production of the insulating separator 43.

Optionally, the cover plate assembly 4 is connected to the first current collector plate 2 by welding. Therefore, a connection between the cover plate assembly 4 and the first current collector plate 2 is secure, thereby preventing the first current collector plate 2 from detaching from the cover plate assembly 4, and ensuring long-term use stability of the cover plate assembly 4 and the first current collector plate 2. But this is not limited thereto.

According to some embodiments of this application, with reference to FIG. 3, the second current collector plate 3 is interference-fitted between the second tab 12 and the cover plate body 41. For example, in the example in FIG. 3, the upper surface of the second current collector plate 3 is connected to the lower surface of the cover plate body 41, and a lower surface of the second current collector plate 3 is connected to the second tab 12. Therefore, contact between the second current collector plate 3 and the second tab 12 as well as the cover plate body 41 is more compact, thereby improving sealing performance at a contact point between the second current collector plate 3 and the cover plate body 41, and improving welding yield between the second current collector plate 3 and the second tab 12 as well as the cover plate body 41.

According to some optional embodiments of this application, with reference to FIG. 3, a height of the second current collector plate 3 is h₁, a distance between a surface of a side of the cover plate body 41 facing the first current collector plate 2 and a surface of a side of the first current collector plate 2 away from the cover plate body 41 is h₂, and h₁ and h₂ satisfy 0 mm≤h₁-h₂≤1 mm. In other words, h₂ indicates a vertical distance between the lower surface of the cover plate body 41 and a lower surface of the connecting protrusion 21. In an assembly process of the battery cell 100, the cover plate assembly 4 is first connected to the first current collector plate 2, and then connected to the second current collector plate 3. For example, when the height h₁ of the second current collector plate 3 and the distance h₂ between the surface of the side of the cover plate body 41 facing the first current collector plate 2 and the surface of the side of the first current collector plate 2 away from the cover plate body 41 satisfy h₁-h₂>1 mm, the height of the second current collector plate 3 is large. This does not facilitate contact between the cover plate body 41 and the upper surface of the second current collector plate 3, may reduce a contact area between the cover plate body 41 and the second current collector plate 3, reduces stability of a connection between the cover plate body 41 and the second current collector plate 3, and does not facilitate normal use of the battery cell 100. Therefore, by setting the height h₁ of the second current collector plate 3 and the distance h₂ between the surface of the side of the cover plate body 41 facing the first current collector plate 2 and the surface of the side of the first current collector plate 2 away from the cover plate body 41 to satisfy 0 mm≤h₁-h₂≤1 mm, sealing performance of contact between the second current collector plate 3 and the cover plate body 41 as well as the second tab 12 is improved, welding yield and stability of connections between the second current collector plate 3 and the cover plate body 41 as well as the second tab 12 are improved, thereby facilitating long-term stable use of the second current collector plate 3.

Optionally, the electrode core 1 is formed by winding, and the tab is a flattened tab or a cut-and-stack tab. The tab is divided into two sides. One side is the first tab 11, and the first tab 11 is connected to the first current collector plate 2; and the other side is the second tab 12, and the second tab 12 is connected to the second current collector plate 3. The first tab 11 and the second tab 12 are spaced apart along a radial direction of the electrode core 1. Therefore, this facilitates production of the electrode core 1. In addition, this can prevent a short circuit caused by overlapping of the first tab 11 and the second tab 12, thereby facilitating normal use of the battery cell 100 for a long period of time, and prolonging service life of the battery cell 100.

Further, optionally, with reference to FIG. 2, a central hole 13 is provided in a central region of the electrode core 1, the central hole 13 is located between the first tab 11 and the second tab 12, opposite sides of the first tab 11 and the second tab 12 are tangent to an edge of the central hole 13, a diameter of the central hole 13 is d₅, and d₅ satisfies 2 mm≤d₅≤10 mm. When the diameter d₅ of the central hole 13 is greater than 10 mm, areas of the first tab 11 and the second tab 12 are small, which reduces contact areas between the first tab 11 and the corresponding first current collector plate 2 and between the second tab 12 and the corresponding second current collector plate 3, and does not facilitate normal use of the battery cell 100. When the diameter d₅ of the central hole 13 is less than 2 mm, a gap between the first tab 11 and the second tab 12 is small, which is prone to overlapping and short-circuiting, and does not facilitate normal use of the battery cell 100. Therefore, by setting the diameter d₅ of the central hole 13 to satisfy 2 mm≤d₅≤10 mm, not only contact areas between the first tab 11 as well as the second tab 12 and the electrode core 1 can be increased, thereby reducing the impedance of the battery cell 100, but also the first tab 11 and the second tab 12 can be prevented from overlapping and short-circuiting, thereby prolonging the service life of the battery cell 100.

Optionally, with reference to FIG. 3, a first insulating member 6 is disposed between the first tab 11 and the second tab 12, lower surfaces of two sides of the first insulating member 6 in a width direction are respectively connected to upper surfaces of two opposite ends of the first tab 11 and the second tab 12, and an upper surface of the first insulating member 6 is connected to a lower surface of the mating part 24 of the first current collector plate 2. With such an arrangement, the first insulating member 6 insulates the first tab 11 from the second tab 12, thereby preventing a short circuit between the first tab 11 and the second tab 12. For example, the first insulating member 6 may be provided as insulating adhesive, so that the first insulating member 6 has a bonding function, and the first insulating member 6 is simplified to operate and has low costs.

According to some optional embodiments of this application, with reference to FIG. 2 and FIG. 3, a second insulating member 7 is disposed on a side of the first current collector plate 2 away from the first tab 11, a base plate 8 is connected to a side of the cover plate assembly 4 away from the electrode core 1, an outer peripheral edge of the base plate 8 is connected to the housing 5, and the electrode core 1, the second current collector plate 3, the first current collector plate 2, and the cover plate assembly 4 are all located inside the housing 5. Therefore, the second insulating member 7 wraps around an upper side surface and an outer peripheral surface of the first current collector plate 2, a side surface of the second insulating member 7 is located between the first current collector plate 2 and the housing 5 of the battery cell 100, and a side of the second insulating member 7 away from the first tab 11 is connected to the base plate 8, so that the second insulating member 7 allows the first current collector plate 2 to be insulatively connected to the base plate 8 and the housing 5 respectively, to prevent the first current collector plate 2 from short-circuiting with the base plate 8 and the housing 5, and also ensure that the current carrier of the first current collector plate 2 flows out after flowing through the positive terminal post 42, thereby ensuring that impedance of the battery cell 100 is low. In addition, the base plate 8 covers internal components of the housing 5. This not only protects the components inside the housing 5, to prevent the components inside the housing 5 from being damaged, but also prevents an internal structure of the housing 5 from being seen, thereby improving aesthetics of the battery cell 100.

Further, with reference to FIG. 1 and FIG. 2, the battery cell 100 includes a separator 9, both the electrode core 1 and the separator 9 are disposed inside the housing 5, the separator 9 is located between the electrode core 1 and an inner wall of the housing 5, and the electrode core 1 is isolated from the inner wall of the housing 5 through the separator 9. For example, in the examples in FIG. 1 and FIG. 2, the separator 9 is disposed inside the housing 5 at an end along a vertical direction, and the separator 9 is located between a lower end of the electrode core 1 and a bottom wall of the housing 5. With such an arrangement, the separator 9 isolates the electrode core 1 from the housing 5, so that the current carrier on the electrode core 1 cannot flow through the housing 5, thereby reducing the structural impedance of the battery cell 100. In addition, an end of the electrode core 1 adjacent to the separator 9 is not in contact with the bottom wall of the housing 5, and the separator 9 has a protective function for the electrode core 1. This may prevent the electrode core 1 from being damaged by direct contact between the electrode core 1 and the housing 5, thereby prolonging service life of the electrode core 1, and prolonging the service life of the battery cell 100. Moreover, a mounting operation of the separator 9 is simplified, that is, the separator 9 only needs to be disposed inside the housing 5, thereby improving assembly efficiency of the battery cell 100.

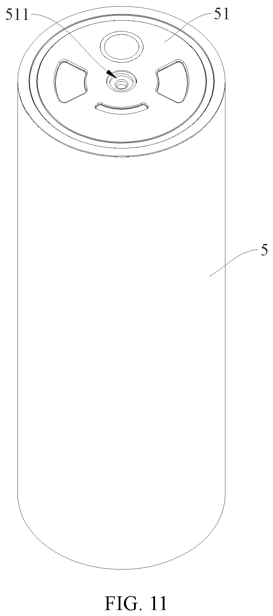

Optionally, with reference to FIG. 11 to FIG. 13, the housing 5 includes a shell body 50 and a bottom cover plate 51, the bottom cover plate 51 is connected to a lower end of the shell body 50 to jointly define a space for arranging the electrode core 1, and the bottom cover plate 51 and the shell body 50 are connected by welding. The bottom cover plate 51 is provided with a liquid injection hole 511, a sealing structure 512 that cooperates with the liquid injection hole 511 is disposed at the liquid injection hole 511, the sealing structure 512 includes an elastic sealing gasket 5121 and a sealing cover 5122, a side of the elastic sealing gasket 5121 away from the electrode core 1 is connected to the sealing cover 5122, and the sealing cover 5122 is welded to an inner wall of the elastic sealing gasket 5121 and the liquid injection hole 511. Therefore, this enhances strength of a connection between the bottom cover plate 51 and a circumferential side wall of the shell body 50, thereby improving structural strength of the housing 5, and facilitating long-term stable use of the housing 5. In addition, this improves manufacturing accuracy of the shell body 50 and the bottom cover plate 51, thereby improving manufacturing accuracy of the housing 5. Moreover, after electrolyte is injected into the battery cell 100 through the liquid injection hole 511, the elastic sealing gasket 5121 is configured to seal the liquid injection hole 511, thereby preventing the electrolyte from leaking out, and preventing damage to the battery cell 100. The sealing cover 5122 further improves sealing performance between the elastic sealing gasket 5121 and the liquid injection hole 511, thereby further preventing the electrolyte from leaking out, and further preventing damage to the battery cell 100.

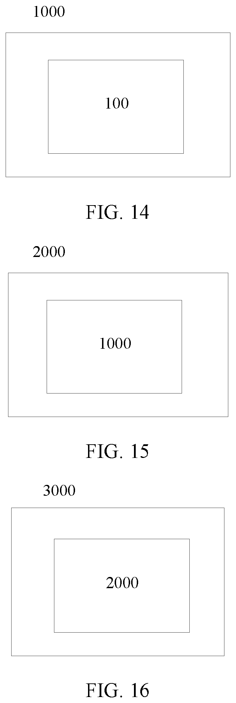

A battery 1000 according to an embodiment of a second aspect in this application includes the battery cell 100 according to the embodiment of the first aspect in this application, as shown in FIG. 14.

The battery 1000 according to this embodiment of this application uses the foregoing battery cell 100 to prolong service life of the battery 1000, and improve use performance of the battery 1000.

A battery module 2000 according to an embodiment of a third aspect in this application includes the battery 1000 according to the embodiment of the second aspect in this application, as shown in FIG. 15.

The battery module 2000 according to this embodiment of this application uses the foregoing battery 1000 to prolong service life of the battery module 2000, and also improve use performance of the battery module 2000.

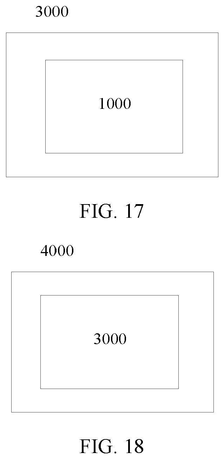

A battery pack 3000 according to an embodiment of a fourth aspect in this application includes the battery 1000 according to the embodiment of the second aspect in this application or the battery module 2000 according to the embodiment of the third aspect in this application, as shown in FIG. 16 and FIG. 17.

The battery pack 3000 according to this embodiment of this application uses the foregoing battery 1000 or the foregoing battery module 2000 to not only prolong service life of the battery pack 3000 but also reduce an impedance inside the battery 1000, and improve use performance of the battery pack 3000.

A power-consuming apparatus 4000 according to an embodiment of a fifth aspect in this application includes the battery pack 3000 according to the embodiment of the fourth aspect in this application, as shown in FIG. 18.

The power-consuming apparatus 4000 according to this embodiment of this application uses the foregoing battery pack 3000 to improve use performance of the power-consuming apparatus 4000. The power-consuming apparatus 4000 may be a vehicle, an electric two-wheeled vehicle, an electric multi-wheeled vehicle, an energy storage cabinet, an uncrewed aerial vehicle, a ship, or the like.

Other configurations and operations of the battery cell 100, the battery 1000, the battery module 2000, the battery pack 3000, and the power-consuming apparatus 4000 according to embodiments of this application are known to a person of ordinary skill in the art, and details are not described herein again.

In descriptions of this application, it will be understood that orientation or position relationships indicated by the terms "upper", "lower", "top", "bottom", "inside", "outside", "axial", "circumferential", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms will not be understood as a limitation on this application.

In descriptions of this specification, reference terms such as "an embodiment", "some embodiments", "example embodiments", "examples", "specific examples", or "some examples" are intended to indicate that specific features, structures, materials, or characteristics described in combination with embodiments or examples are included in at least one embodiment or example of this application. In this specification, schematic representations of the terms do not necessarily indicate the same embodiment or example.

Although embodiments of this application have been shown and described, a person of ordinary skill in the art will understand that various changes, modifications, substitutions, and variations may be made to the embodiments without departing from the principle and spirit of this application, and the scope of this application is defined by the claims and their equivalents.

## Claims

1. A battery cell (100), comprising:
an electrode core (1), a first tab (11) and a second tab (12) being disposed at an end of the electrode core (1);
a first current collector plate (2), the first current collector plate (2) being disposed at the end of the electrode core (1), and the first current collector plate (2) being connected to the first tab (11); and
a second current collector plate (3), the second current collector plate (3) being disposed at the end of the electrode core (1), the second current collector plate (3) being connected to the second tab (12), and at least one of the second current collector plate (3) and the first current collector plate (2) being a single-layer structural member.

2. The battery cell (100) according to claim 1, wherein the first current collector plate (2) is located on a side of the first tab (11) away from the electrode core (1), and the second current collector plate (3) is located on a side of the second tab (12) away from the electrode core (1).

3. The battery cell (100) according to claim 1 or 2, wherein the second current collector plate (3) comprises:
a first connecting part (31), the second current collector plate (3) being connected to the second tab (12) through the first connecting part (31);
a second connecting part (32), the second connecting part (32) being disposed on a side of the first connecting part (31) away from the second tab (12); and
a third connecting part (33), the third connecting part (33) being connected to a side of the second connecting part (32) away from the first connecting part (31).

4. The battery cell (100) according to claim 3, wherein both the first connecting part (31) and the third connecting part (33) extend along a direction perpendicular to a central axis of the electrode core (1), and the second connecting part (32) is perpendicularly connected between the first connecting part (31) and the third connecting part (33).

5. The battery cell (100) according to claim 3 or 4, wherein the first connecting part (31) comprises two first sub-connecting parts (311) spaced apart, each first sub-connecting part (311) comprises a first side edge (3111) and a second side edge (3112), the first side edge (3111) and the second side edge (3112) are not on the same straight line, the first side edges (3111) of the two first sub-connecting parts (311) are opposite to each other, and the second side edges (3112) of the two first sub-connecting parts (311) are located on the same straight line;
the second connecting part (32) comprises two second sub-connecting parts (321) spaced apart, one side of one of the second sub-connecting parts (321) is connected to the first side edge (3111) and the second side edge (3112) of one of the first sub-connecting parts (311), and one side of the other of the second sub-connecting parts (321) is connected to the first side edge (3111) and the second side edge (3112) of the other of the first sub-connecting parts (311); and
the third connecting part (33) comprises a third sub-connecting part (331) and a fourth sub-connecting part (332), the third sub-connecting part (331) is connected between other sides of the two second sub-connecting parts (321) opposite to the first side edges (3111) of the two first sub-connecting parts (311), one side of the fourth sub-connecting part (332) is connected to other sides of the two second sub-connecting parts (321) opposite to the second side edges (3112) of the two first sub-connecting parts (311) and to the third sub-connecting part (331), and the other side of the fourth sub-connecting part (332) extends toward a direction away from the first connecting part (31).

6. The battery cell (100) according to claim 5, wherein the first side edge (3111) and the second side edge (3112) are perpendicular to each other.

7. The battery cell (100) according to claim 5 or 6, wherein the second current collector plate (3) is symmetrically arranged with respect to an extension direction of the third sub-connecting part (331).

8. The battery cell (100) according to any one of claims 3 to 6, wherein a minimum distance between the first connecting part (31) and the central axis of the electrode core (1) is d₁, and d₁ satisfies 2 mm≤d₁≤7.7 mm.

9. The battery cell (100) according to any one of claims 3 to 7, wherein the first connecting part (31) is located on a radially inner side of an outer peripheral edge of the electrode core (1), a distance between the first connecting part (31) and the outer peripheral edge of the electrode core (1) is d₂, and d₂ satisfies 0.5 mm≤d₂≤2 mm.

10. The battery cell (100) according to any one of claims 1 to 9, wherein the second current collector plate (3) is a negative current collector plate, and the second current collector plate (3) is a stamped part made of steel or copper.

11. The battery cell (100) according to any one of claims 1 to 10, wherein a connecting protrusion (21) is provided on a surface of a side of the first current collector plate (2) adjacent to the first tab (11), and the first current collector plate (2) is connected to the first tab (11) through the connecting protrusion (21).

12. The battery cell (100) according to claim 11, wherein the connecting protrusion (21) comprises a first protrusion part (211) and a second protrusion part (212), one end of the first protrusion part (211) is connected to one end of the second protrusion part (212), and the other end of the first protrusion part (211) and the other end of the second protrusion part (212) extend toward a direction away from each other.

13. The battery cell (100) according to claim 12, wherein an included angle between the first protrusion part (211) and the second protrusion part (212) is β, and β satisfies 20°≤β≤80°.

14. The battery cell (100) according to claim 12 or 13, wherein the one end of the first protrusion part (211) and the one end of the second protrusion part (212) are adjacent to a center of the end of the electrode core (1), and the other end of the first protrusion part (211) and the other end of the second protrusion part (212) extend toward a direction away from the center of the end of the electrode core (1) and pass through an outer peripheral edge of the first current collector plate (2).

15. The battery cell (100) according to any one of claims 12 to 14, wherein a notch (22) is formed at an edge of the first current collector plate (2) away from the center of the end of the electrode core (1).

16. The battery cell (100) according to claim 15, wherein the notch (22) is located between the other end of the first protrusion part (211) and the other end of the second protrusion part (212).

17. The battery cell (100) according to any one of claims 11 to 16, wherein a minimum distance between the connecting protrusion (21) and the central axis of the electrode core (1) is d₃, and d₃ satisfies 2 mm≤d₃≤8 mm.

18. The battery cell (100) according to any one of claims 11 to 17, wherein the connecting protrusion (21) is formed by a portion of a surface of a side of the first current collector plate (2) away from the first tab (11) protruding toward a surface of a side adjacent to the first tab (11).

19. The battery cell (100) according to claim 18, wherein the connecting protrusion (21) forms a groove (23) in the surface of the side of the first current collector plate (2) away from the first tab (11), to form the connecting protrusion (21) on the surface of the side adjacent to the first tab (11), a depth of the groove (23) is h, and h satisfies 0 mm<h≤2 mm.

20. The battery cell (100) according to any one of claims 1 to 19, wherein a minimum distance between a side of the first current collector plate (2) away from the central axis of the electrode core (1) and an outer peripheral surface of the electrode core (1) is d₄, and d₄ satisfies 0.5 mm≤d₄≤2 mm.

21. The battery cell (100) according to any one of claims 1 to 20, wherein the first current collector plate (2) is a positive current collector plate, and the first current collector plate (2) is a stamped part made of an aluminum sheet.

22. The battery cell (100) according to any one of claims 1 to 21, further comprising:
a cover plate assembly (4), the cover plate assembly (4) being disposed on a side of the first current collector plate (2) away from the electrode core (1).

23. The battery cell (100) according to claim 22, wherein the cover plate assembly (4) comprises:
a cover plate body (41), the second current collector plate (3) being connected to the cover plate body (41); and
a positive terminal post (42), the positive terminal post (42) passing through the cover plate body (41), the positive terminal post (42) being insulatively connected to the cover plate body (41), and the first current collector plate (2) being connected to the positive terminal post (42).

24. The battery cell (100) according to claim 23, wherein the positive terminal post (42) comprises a first terminal post segment (421) and a second terminal post segment (422) connected to each other, and the first terminal post segment (421) passes through the cover plate body (41); and
the cover plate assembly (4) further comprises:
an insulating separator (43), the insulating separator (43) being disposed between the cover plate body (41) and the second terminal post segment (422).

25. The battery cell (100) according to claim 24, wherein an anti-rotation groove (431) is formed in the insulating separator (43), and the second terminal post segment (422) is fitted in the anti-rotation groove (431); and
the first current collector plate (2) is provided with a mating part (24) extending toward the anti-rotation groove (431), the mating part (24) is fitted in the anti-rotation groove (431), and the mating part (24) is located on a side of the second terminal post segment (422) away from the cover plate body (41).

26. The battery cell (100) according to claim 25, wherein an anti-rotation protrusion (432) is provided on a surface of a side of the insulating separator (43) adjacent to the first current collector plate (2), the anti-rotation protrusion (432) and the surface of the side of the insulating separator (43) adjacent to the first current collector plate (2) together define the anti-rotation groove (431), and a side of the anti-rotation groove (431) adjacent to a center of the first current collector plate (2) is open.

27. The battery cell (100) according to any one of claims 23 to 26, wherein the second current collector plate (3) is interference-fitted between the second tab (12) and the cover plate body (41).

28. The battery cell (100) according to any one of claims 23 to 27, wherein a height of the second current collector plate (3) is h₁, a distance between a surface of a side of the cover plate body (41) facing the first current collector plate (2) and a surface of a side of the first current collector plate (2) away from the cover plate body (41) is h₂, and h₁ and h₂ satisfy 0 mm≤h₁-h₂≤1 mm.

29. A battery (1000), comprising the battery cell (100) according to any one of claims 1 to 28.

30. A battery module (2000), comprising the battery (1000) according to claim 29.

31. A battery pack (3000), comprising the battery (1000) according to claim 29 or the battery module (2000) according to claim 30.

32. A power-consuming apparatus (4000), comprising the battery pack (3000) according to claim 31.
